# EUROPEAN PATENT APPLICATION

(11) **EP 3 316 076 A1**
(43) Date of publication of application: **02.05.2018**
(21) Application number: 16306402.5
(22) Date of filing: 25.10.2016
(51) Int. Cl.: G06F 3/01

(54) **ACTIVITY COMPENSATED HAPTIC INTERFACE**

(71) Applicant: Thomson Licensing, 92130 Issy-les-Moulineaux (FR)
(72) Inventor: LYONS, Kent, Princeton, NJ New Jersey 08540 (US)
(74) Representative: Ståhl, Björn Niclas

(57) **Abstract**

A device (100) and method for emitting a haptic signal to a user. In the device, a sensor unit (110) measures (S410) acceleration data relating to the device, a processor (130) determines (S420), using at least the acceleration data, one of at least two states for the user, a first state indicating relatively low sensitivity to a haptic signal and a second state indicating relatively high sensitivity to a haptic signal. The processor determines (S430) an occurrence of an event in response to which a haptic signal should be given to the user and sends (S440), in response to the occurrence of an event, instructions to a haptic interface (120) to provide the first haptic feedback upon determination of the first state and provide the second haptic feedback upon determination of the second state. The haptic interface (120) provides (S450) a haptic signal in accordance with the instructions. The haptic signal can be made stronger when the user is less sensitive to the haptic signal.

## Description

### TECHNICAL FIELD

The present disclosure relates generally to mobile devices and in particular to haptic interfaces on such devices.

### BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Haptic actuation is commonly used on mobile devices, such as smartphones and smart watches. An example is when a vibrotactile notification (vibration) is generated to notify the user of an incoming message on the mobile device. If the user is moving (walking, running,...) it can be easy to miss the vibrotactile notification because the signal is not strong enough to overcome the effects of any other motion the user is experiencing. Alternatively, if the intensity or duration is increased, this might be jarring to an essentially stationary user.

Current haptic interfaces are ignorant of user context. They generate a signal based only on the source application. For example, current haptic actuation (e.g., vibrotactile interfaces) may create interface patterns based on application content. Some might have various levels (like setting the ring tone volume on a phone).

Modern mobile devices - as described in for example US 7,421,369 B2 - may also perform activity recognition, e.g., detecting that a user is walking to track a user's steps or distance travelled, but such activity detection is not connected with device output capabilities.

It will therefore be appreciated that there is a desire for a solution that addresses at least some of the shortcomings of the conventional solutions. The present principles provide such a solution.

### SUMMARY OF DISCLOSURE

In a first aspect, the present principles are directed to a device for emitting a haptic signal to a user. The device comprises a sensor unit configured to measure acceleration data relating to the device, a haptic interface capable of providing a first haptic signal having a first intensity and a second haptic signal having a second intensity and a processor configured to determine, using at least the acceleration data, one of at least two states for the user, a first state indicating relatively low user sensitivity to a haptic signal and a second state indicating relatively high user sensitivity to a haptic signal and instruct, in response to an occurrence of an event in response to which a haptic signal should be given to the user, the haptic interface to provide the first haptic signal upon determination of the first state and provide the second haptic signal upon determination of the second state.

Embodiments of the first aspect comprise:
- That the states represent user activity and the first state represents an activity with relatively big user movement and the second state represents an activity with relatively small user movement.
- That the first state is determined to occur during periods straddling the user's footfalls and the second state is determined to occur between the user's footfalls.
- That the first state indicates that the device is worn on a part of the user's body that is relatively insensitive to a haptic signal and the second state indicates that the device is worn on a part of the user's body that is relatively sensitive to a haptic signal.
- That the first intensity of the first haptic signal is higher than the second intensity of the second haptic signal.
- That the sensor unit comprises at least one inertial sensor.
- That the haptic interface is a vibrotactile interface.

In a second aspect, the present principles are directed to a method for emitting a haptic signal to a user. In a device a sensor unit measures acceleration data relating to the device, a processor determines, using at least the acceleration data, one of at least two states for the user, a first state indicating relatively low sensitivity to a haptic signal and a second state indicating relatively high sensitivity to a haptic signal, and sends, in response to an occurrence of an event in response to which a haptic signal should be given to the user, instructions to a haptic interface to provide the first haptic feedback upon determination of the first state and provide the second haptic feedback upon determination of the second state. The haptic interface provides a haptic signal in accordance with the instructions.

Embodiments of the second aspect comprise:
- That the states represent user activity and the first state represents an activity with relatively big user movement and the second state represents an activity with relatively small user movement.
- That the first state is determined to occur during periods straddling the user's footfalls and the second state is determined to occur between the user's footfalls.
- That the first state indicates that the device is worn on a part of the user's body that is relatively insensitive to a haptic signal and the second state indicates that the device is worn on a part of the user's body that is relatively sensitive to a haptic signal.
- That an intensity of the first haptic signal is higher than an intensity of the second haptic signal.
- Determining by the processor the occurrence of the event.

In a third aspect, the present principles are directed to a computer program comprising program code instructions executable by a processor for implementing the method according to the second aspect.

In a fourth aspect, the present principles are directed to a computer program product which is stored on a non-transitory computer readable medium and comprises program code instructions executable by a processor for implementing the method according to the second aspect.

### BRIEF DESCRIPTION OF DRAWINGS

Preferred features of the present principles will now be described, by way of non-limiting example, with reference to the accompanying drawings, in which:
Figure 1 illustrates an exemplary mobile device according to the present principles;
Figure 2 illustrates a first exemplary operation of the present principles;
Figure 3 illustrates a second exemplary operation of the present principles; and
Figure 4 illustrates a method of providing a haptic signal to the present principles.

### DESCRIPTION OF EMBODIMENTS

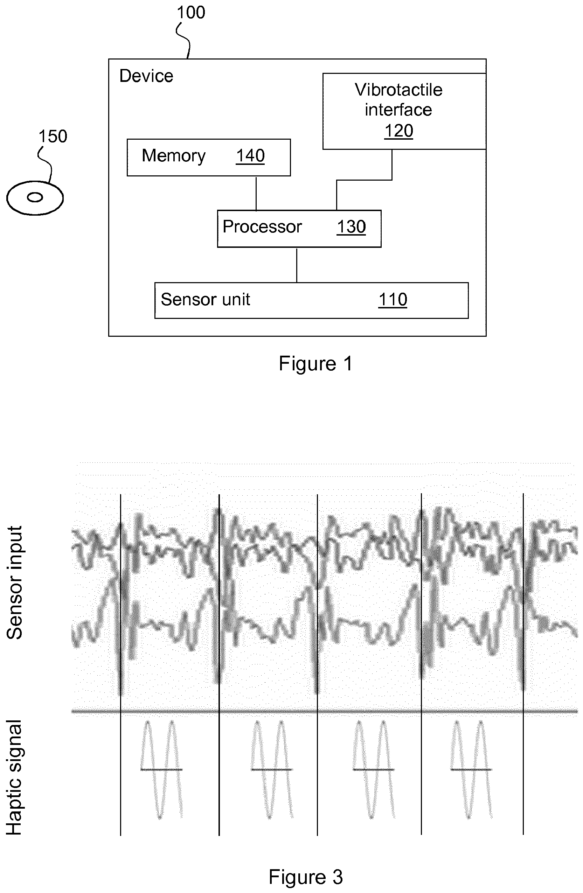

Figure 1 illustrates an exemplary mobile device 100 according to the present principles. As already mentioned, the mobile device 100 can be a smartphone or a smart watch, but other mobile devices that a user tends to be in contact with or wear over a prolonged period of time are also possible. The mobile device 100 comprises at least one hardware processing unit ("processor") 130 configured to execute instructions of a software program implementing at least part of the current principles and to analyse user movement and determine parameters of a haptic signal (in particular a vibrotactile response), as will be further described hereinafter. The mobile device 100 further comprises at least one memory 140 (for example ROM, RAM and Flash or a combination thereof) configured to store the software program and intermediate data. The mobile device 100 also comprises at least one haptic user interface 120 for generating the haptic signal and a sensor unit 110, comprising for example an inertial sensor such as an accelerometer.

The sensor unit 110 is configured to gather data relating to the movements of the device and thus enabling determining user movements or activities. The data can also be used to determine the location of the device on the user. How this is done is well known in the art and for example described in US 7,421,369 B2 that uses a six-degree-of-freedom inertial sensor; in the interest of succinctness, the nature of the data and how user movements and activities and device locations will not be further described herein.

The haptic user interface 120 is capable of providing a first haptic signal having a first intensity and a second haptic signal having a second intensity. The first intensity can be lower (i.e., less noticeable) than the second intensity, but the first intensity can also be higher than the second intensity. The intensities can depend on the operation, as will be further described hereinafter.

The processor 130 is configured to use the data relating to the movements of the device to determine one of at least two states for the user. As will be further described hereinafter, a first state indicates relatively low user sensitivity to a haptic signal and a second state indicating relatively high user sensitivity to a haptic signal. More than two states may be used.

The processor 130 is further configured to determine the occurrence of an event in response to which a haptic signal should be given to the user. A first example of an event is an incoming telephone call, in which case the haptic signal is equivalent to a ring signal. A second example of the event is a reminder, for example an alarm set by the user. Further examples include directional instructions ("left", "right", "straight on",...) and when the user's heart frequency exceeds (or goes below) a given limit. A plurality of different events may trigger, possibly different, haptic signals; for reasons of clarity, a single event is used in this description.

The processor is also configured to instruct, in response to an occurrence of the event, the haptic user interface 120 to provide the first haptic signal upon determination of the first state and provide the second haptic signal upon determination of the second state. This is preferably done by sending an instruction comprising the determined parameters of the haptic signal to the haptic user interface 120.

Non-transitory storage media 150 stores a computer program with instructions that, when executed by a processor, performs the method according to the present principles described in Figure 3.

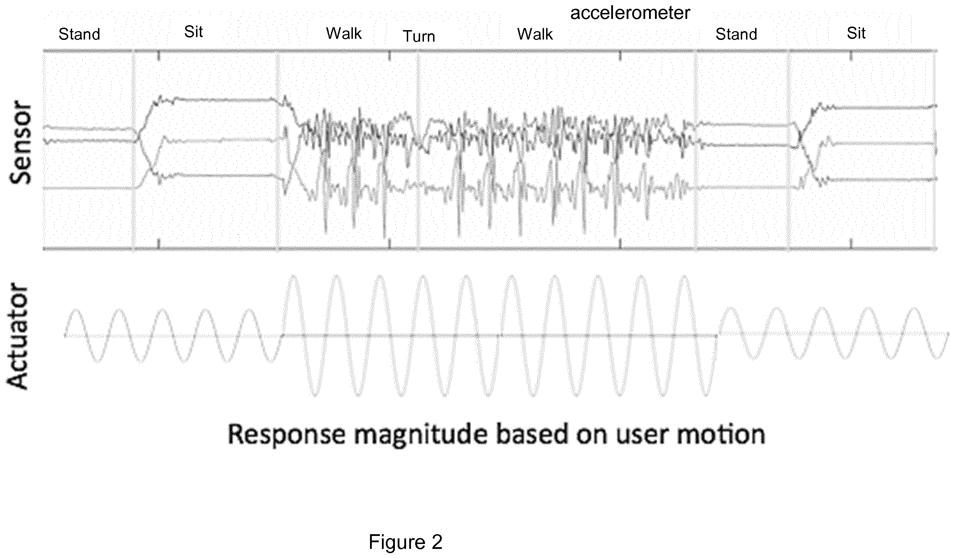

In a first exemplary operation of the present principles, illustrated in Figure 2, the states relate to user activity such as for example two or more of 'sitting', 'standing', 'walking' and 'running'. In this case, the more the user moves, the stronger the haptic signal to compensate for the fact that the user is likely to be less sensitive to the haptic signal. For instance, a low intensity haptic signal is emitted if the user sits and a high intensity signal is emitted if the user runs. In other words, a first state represents an activity with relatively big user movement (such as running) and a second state represents an activity with relatively small user movement (such as sitting).

The determination of the user activity can for example be based on the magnitude of the data relating to the movements of the device; the higher the magnitude, the more the user moves. As is well known, the magnitude can be averaged over a, preferably small, moving time window. In other words, the magnitude of data for the first activity is higher than the magnitude of data for the second activity.

In a second exemplary operation of the present principles, illustrated in Figure 3, the states relate to phases of the same user movement. For example, during walking or running, the first state occurs around the user's footfalls (indicated by vertical lines) and the second state occurs between the user's footfalls. As illustrated, the haptic signal is emitted in between the footfalls during the second state when there is relatively little movement. As such, the haptic signal has a higher chance of being noticed by the user. The Figure shows no haptic signal at all around the footfalls (i.e., during the first state), but it is also possible for the haptic user interface to emit a haptic signal when the first state occurs, in which case its intensity is different from that of the haptic signal emitted between the footfalls.

In a third exemplary operation of the present principles, the states relate to the location of the device on the user's body. For instance, if the device is a mobile phone and is held in the hand, this corresponds to the second state (in which the user is relatively sensitive to the haptic signal), while the mobile phone in the user's pocket corresponds to the first state (in which the user is relatively insensitive to the haptic signal).

As mentioned, the first intensity can be higher than the second intensity. In this case, the haptic signal is more subtle so as to not immediately interrupt the user.

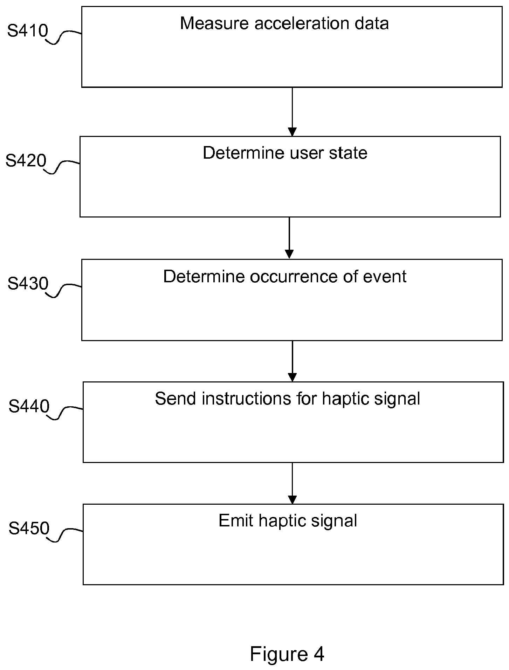

Figure 4 illustrates a method of providing a haptic signal to the present principles. In step S410, the sensor unit (110 in Figure 1) measures acceleration data relating to the device. In step S420, the processor (130 in Figure 1) determines, using at least the acceleration data, one of at least two states for the user. As already mentioned, a first state indicates relatively low sensitivity to a haptic signal and a second state indicates relatively high sensitivity to a haptic signal. In step S430, the processor determines the occurrence of an event in response to which a haptic signal should be given to the user. Steps S410, S420 and S430 are preferably performed repeatedly at a repetition rate selected to ensure detecting events. The repetition rate may be high, producing essentially continuous repetition, but the repetition rate may also be lower, producing a noncontinuous repetition selected to be adequate to detect a particular type of event. That is, the repetition rate may depend on the type of event.

In step S440, in response to an occurrence of the event, the processor sends, instructions to the haptic interface (120 in Figure 1) to provide the first haptic feedback upon determination of the first state and provide the second haptic feedback upon determination of the second state. In step S450, the haptic interface provides a haptic signal in accordance with the instructions.

As will be appreciated, the method corresponds to the mobile device of Figure 1 and various embodiments can be the same.

It will be appreciated that the present principles can provide a solution for haptic interfaces that can enable to be adaptive to user activities and thus provide more apt user notifications.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

## Claims

1. A device (100) for emitting a haptic signal to a user, the device comprising:
a sensor unit (110) configured to measure acceleration data relating to the device;
a haptic interface (120) capable of providing a first haptic signal having a first intensity and a second haptic signal having a second intensity; and
a processor (130) configured to:
determine, using at least the acceleration data, one of at least two states for the user, a first state indicating a first user sensitivity to a haptic signal and a second state indicating a second user sensitivity to a haptic signal, wherein the first user sensitivity is lower than the second user sensitivity; and
instruct, in response to an occurrence of an event in response to which a haptic signal should be given to the user, the haptic interface to provide the first haptic signal upon determination of the first state and provide the second haptic signal upon determination of the second state.

2. The device of claim 1, wherein the states represent user activity and the first state represents an activity with first user movement and the second state represents an activity with second user movement, wherein the first user movement is bigger than the second user movement.

3. The device of claim 1, wherein the first state is determined to occur during periods straddling the user's footfalls and the second state is determined to occur between the user's footfalls.

4. The device of claim 1, wherein the first state indicates that the device is worn on a first part of the user's body and the second state indicates that the device is worn on a second part of the user's body, wherein the first part of the user's body is less sensitive to a haptic signal than the second part of the user's body.

5. The device any one of claims 1-4, wherein the first intensity is higher than the second intensity.

6. The device of claim 1, wherein the sensor unit comprises at least one inertial sensor.

7. The device of claim 1, wherein the haptic interface (120) is a vibrotactile interface.

8. A method for emitting a haptic signal to a user, the method comprising at a device (100):
measuring (S410), by a sensor unit (110), acceleration data relating to the device;
determining (S420), by a processor (130) using at least the acceleration data, one of at least two states for the user, a first state indicating a first user sensitivity to a haptic signal and a second state indicating a second user sensitivity to a haptic signal, wherein the first user sensitivity is lower than the second user sensitivity;
sending (S440), by the processor in response to an occurrence of an event in response to which a haptic signal should be given to the user, instructions to a haptic interface (120) to provide the first haptic feedback upon determination of the first state and provide the second haptic feedback upon determination of the second state; and
providing (S450), by the haptic interface (120), a haptic signal in accordance with the instructions.

9. The method of claim 8, wherein the states represent user activity and the first state represents an activity with first user movement and the second state represents an activity with second user movement, wherein the first user movement is bigger than the second user movement.

10. The method of claim 8, wherein the first state is determined to occur during periods straddling the user's footfalls and the second state is determined to occur between the user's footfalls.

11. The method of claim 8, wherein the first state indicates that the device is worn on a first part of the user's body and the second state indicates that the device is worn on a second part of the user's body, wherein the first part of the user's body is less sensitive to a haptic signal than the second part of the user's body.

12. The method any one of claims 8-11, wherein an intensity of the first haptic signal is higher than an intensity of the second haptic signal.

13. The method of claim 8, further comprising determining (S430) by the processor (130) the occurrence of the event.

14. Computer program comprising program code instructions executable by a processor for implementing the method according to any one of claims 8-13.

15. Computer program product which is stored on a non-transitory computer readable medium and comprises program code instructions executable by a processor for implementing the method according to any one of claims 8-13.
